(19) Europäisches Patentamt
European Patent Office
Office européen des brevets

(11) EP 4 317 229 A1

(12) EUROPEAN PATENT APPLICATION
published in accordance with Art. 153(4) EPC

(43) Date of publication:
**07.02.2024 Bulletin 2024/06**

(21) Application number: **22780703.9**

(22) Date of filing: **28.03.2022**

(51) International Patent Classification (IPC):
***C08F 283/12*** (2006.01) ***C08F 290/06*** (2006.01)
***C08G 77/442*** (2006.01) ***C08L 33/04*** (2006.01)
***C08L 51/08*** (2006.01) ***C08L 83/04*** (2006.01)
***C08L 101/00*** (2006.01)

(52) Cooperative Patent Classification (CPC):
**C08F 283/12; C08F 290/06; C08G 77/442; C08L 33/04; C08L 51/08; C08L 83/04; C08L 101/00**

(86) International application number:
**PCT/JP2022/014884**

(87) International publication number:
**WO 2022/210492 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021056873**

(71) Applicant: **Mitsubishi Chemical Corporation**
**Chiyoda-ku**
**Tokyo 100-8251 (JP)**

(72) Inventors:
- **ARAI, Hiroya**
  **Tokyo 100-8251 (JP)**
- **MAENAKA, Yuta**
  **Tokyo 100-8251 (JP)**
- **IIMORI, Masashi**
  **Tokyo 100-8251 (JP)**

(74) Representative: **Ter Meer Steinmeister & Partner Patentanwälte mbB**
**Nymphenburger Straße 4**
**80335 München (DE)**

# (54) POLYORGANOSILOXANE-CONTAINING POLYMER, COMPOSITION, AND MOLDED ARTICLE

(57) Provided is a polyorganosiloxane-containing polymer which makes it possible to obtain a molded product exhibiting excellent flame retardance without significantly degrading the impact resistance characteristics in a case where the polyorganosiloxane-containing polymer is added to a resin. The polyorganosiloxane-containing polymer according to the present invention contains alkali metal atoms of 100 ppm by mass or more and has a mass average particle diameter Dw of 350 nm or more.



Processed by Luminess, 75001 PARIS (FR)

## Description

[Technical Field]

The present invention relates to a polyorganosiloxane-containing polymer, a composition, and a molded product.

Priority is claimed on Japanese Patent Application No. 2021-056873 filed March 30, 2021, the content of which is incorporated herein by reference.

[Background Art]

A rubber-containing polymer, in which a vinyl monomer is polymerized with respect to a rubber-like polymer, can be dispersed in a wide variety of resins while maintaining a predetermined rubber particle diameter and a rubber structure, and thus it is suitably used for a resin that requires an impact strength.

Among the above, a silicone-based rubber is hardly cured or colored by heat or ultraviolet rays as compared with a butadiene rubber and has excellent durability, and thus it is suitably used for use applications that require maintaining mechanical characteristics over a long period of time, such as construction materials and automobile parts. As the silicone-based rubber, a polyorganosiloxane represented by a polydimethylsiloxane has been used, and various graft copolymers using rubber containing such a polyorganosiloxane have been known.

Patent Document 1 describes a polyorganosiloxane-containing graft copolymer having a specific glass transition temperature (Tg), in which a monofunctional vinyl monomer and a polyfunctional vinyl monomer are graft-polymerized at a specific ratio to rubber containing a polyorganosiloxane.

Patent Document 2 describes a polyorganosiloxane-containing graft copolymer, in which a volume average particle diameter is 300 to 2,000 nm and a polyorganosiloxane content is 70% to 98% by mass.

[Citation List]

[Patent Documents]

[Patent Document 1]
PCT International Publication No. WO2018/225582
[Patent Document 2]
PCT International Publication No. WO2013/162080

[Summary of Invention]

[Technical Problem]

When the polyorganosiloxane-containing polymer described in Patent Document 1 or 2 is added to a resin, there may be a problem in the flame retardance of a molded product to be obtained. In addition, when a flame retardant such as a metal salt is added to a thermoplastic resin in addition to the polyorganosiloxane-containing polymer in order to improve the flame retardance, the impact resistance characteristics may significantly deteriorate.

An object of the present invention is to provide a polyorganosiloxane-containing polymer which makes it possible to obtain a molded product exhibiting excellent flame retardance without significantly degrading the impact resistance characteristics in a case where the polyorganosiloxane-containing polymer is added to a resin.

[Solution to Problem]

The present invention has the following aspects.

[1] A polyorganosiloxane-containing polymer comprising:

100 ppm by mass or more of an alkali metal atom,
wherein a mass average particle diameter Dw is 350 nm or more.

[2] The polyorganosiloxane-containing polymer according to [1], wherein the mass average particle diameter Dw is 1,000 nm or less.

[3] The polyorganosiloxane-containing polymer according to [1] or [2], wherein the polyorganosiloxane-containing polymer is a polymer having a composite body and a graft part,

the composite body ccomprises a polyorganosiloxane and a first vinyl polymer, and
the graft part ccomprises a second vinyl polymer.

[4] The polyorganosiloxane-containing polymer according to [3], wherein a proportion of the graft part in 100% by mass of the polyorganosiloxane-containing polymer is 5% by mass or more and 20% by mass or less.
[5] The polyorganosiloxane-containing polymer according to [3] or [4], wherein the first vinyl polymer ccomprises a constitutional unit derived from a (meth)acrylate monomer.
[6] The polyorganosiloxane-containing polymer according to any one of [3] to [5],
wherein the second vinyl polymer ccomprises a constitutional unit derived from a (meth)acrylate monomer.
[7] The polyorganosiloxane-containing polymer according to any one of [3] to [6],

wherein the polyorganosiloxane comprises a constitutional unit derived from a siloxane-based crosslinking agent, and
a proportion of the constitutional unit derived from the siloxane-based crosslinking agent in 100% by mass of the polyorganosiloxane is 3% by mass or less.

[8] The polyorganosiloxane-containing polymer according to any one of [1] to [7],
wherein a proportion of a polyorganosiloxane in 100% by mass of the polyorganosiloxane-containing polymer is 70% by mass or more and 98% by mass or less.
[9] The polyorganosiloxane-containing polymer according to any one of [1] to [8],
wherein the alkali metal atom is a sodium atom.
[10] The polyorganosiloxane-containing polymer according to any one of [1] to [9],
wherein the polyorganosiloxane-containing polymer is in a powder state.
[11] A composition comprising:

the polyorganosiloxane-containing polymer according to any one of [1] to [10]; and
a thermoplastic resin.

[12] A molded product comprising:

the polyorganosiloxane-containing polymer according to any one of [1] to [10]; and
a thermoplastic resin.

[Advantageous Effects of Invention]

According to the present invention, it is possible to provide a polyorganosiloxane-containing polymer which makes it possible to obtain a molded product exhibiting excellent flame retardance without significantly degrading the impact resistance characteristics in a case where the polyorganosiloxane-containing polymer is added to a resin.

[Description of Embodiments]

Hereinafter, embodiments of the present invention will be described in detail. However, the present invention is not limited to the explanation of the embodiments, and those other than the following examples can be appropriately modified and implemented as long as the gist of the present invention is not impaired.
In the present invention, the vinyl monomer means a compound having a polymerizable double bond.
In the present invention, (meth)acrylic means one or both of acrylic and methacrylic, and the (meth)acrylic acid ester means one or both of an acrylic acid ester and a methacrylic acid ester.
In the present specification, "to" is used in a meaning that includes numerical values described before and after the "to" as a lower limit value and an upper limit value. That is, a numerical value represented by "A to B" means A or more and B or less.

<Polyorganosiloxane-containing polymer>

The polyorganosiloxane-containing polymer (hereinafter, also denoted as a "polymer (C)") according to one aspect of the present invention consists of a polymer (A) and a second vinyl polymer (B) (hereinafter, also denoted as

a "vinyl polymer (B)"). The polymer (A) is preferably a composite body that contains at least a polyorganosiloxane (A1) and further containing a first vinyl polymer (A2) (hereinafter, also denoted as a "vinyl polymer (A2)"). It is preferable that the polyorganosiloxane (A1) and the vinyl polymer (B) are at least partially crosslinked. The polyorganosiloxane-containing polymer is preferably a graft copolymer that has a composite body (a composite rubber-like polymer) of the polyorganosiloxane (A1) and the vinyl polymer (A2) and has a graft part containing a vinyl polymer (B1)

The polymer (C) contains an alkali metal atom of 100 ppm by mass or more and has a mass average particle diameter Dw of 350 nm or more.

In the present invention, the atomic weight of the alkali metal atom is measured according to a measuring method described in Examples. The mass average particle diameter is measured according to a method described in Examples.

This makes it possible to provide a molded product having high flame retardance and excellent external appearance properties while having high impact resistance characteristics, in a case manufacturing the molded product by blending with a resin.

In a case where an alkali metal atom is present on the surface of the polyorganosiloxane-containing polymer, the thermal decomposability of the polyorganosiloxane-containing polymer tends to be improved. In addition, in a case where the particle diameter of the polyorganosiloxane-containing polymer is large, the thickness of the vinyl polymer (B) increases, and thus the dispersion in the resin tends to be excellent. Here, it is conceived that in a case where the polyorganosiloxane-containing polymer which has been uniformly dispersed in the resin composition is instantly decomposed in the vicinity of the decomposition temperature of the resin, a dense carbonized layer is formed, and as a result, the flame retardance of the molded product is improved.

The polyorganosiloxane-containing polymer can be obtained as a powdery polymer by carrying out a treatment including drying after obtaining a latex-shaped polymer as described below. However, depending on the treatment method, the amount of the alkali metal contained in the obtained powdery polymer may decrease even when the latex-shaped polyorganosiloxane-containing polymer contains an alkali metal atom. Therefore, in order to exhibit the above-described effect, it is preferable that the polyorganosiloxane-containing polymer in the production of the resin composition, that is, the powdery polyorganosiloxane-containing polymer is a powder group containing a polyorganosiloxane-containing polymer which contains an alkali metal atom of 100 ppm or more and has a mass average particle diameter Dw of 350 nm or more.

For improving the external appearance properties and the moist heat resistance, the mass average particle diameter Dw of the polyorganosiloxane-containing polymer is 350 nm or more, preferably 375 nm or more, and more preferably 400 nm or more. From the viewpoint of improving productivity, the mass average particle diameter Dw of the polyorganosiloxane-containing polymer is preferably 1,000 nm or less, more preferably 800 nm or less, still more preferably 600 nm or less, and particularly preferably 500 nm or less. The upper and lower limits thereof may be combined in any combination. For example, 350 to 1,000 nm is preferable, 350 to 800 nm is more preferable, 375 to 600 nm is still more preferable, and 400 to 500 nm is particularly preferable.

For improving flame retardance and moist heat resistance, the atomic weight of the alkali metal atom contained in the polyorganosiloxane-containing polymer is 100 ppm by mass or more, preferably 150 ppm by mass or more, and more preferably 200 ppm by mass or more. For improving impact resistance, the atomic weight of the alkali metal atom contained in the polyorganosiloxane-containing polymer is preferably 1,000 ppm by mass or less, more preferably 800 ppm by mass or less, still more preferably 600 ppm by mass or less, and particularly preferably 400 ppm by mass or less. The upper and lower limits thereof may be combined in any combination. For example, 100 to 1,000 ppm by mass is preferable, 100 to 800 ppm by mass is more preferable, 150 to 600 ppm by mass is still more preferable, and 200 to 400 ppm by mass is particularly preferable.

The alkali metal is not particularly limited, and examples thereof include a lithium atom, a sodium atom, a potassium atom, a rubidium atom, and a cesium atom. The polyorganosiloxane-containing polymer may contain one kind of alkali metal atom or may contain two or more kinds of alkali metal atoms. When the polyorganosiloxane-containing polymer contains two or more kinds of alkali metal atoms, the amount of the alkali metal atom contained in the polyorganosiloxane-containing polymer means the total mass of the alkali metal atoms. The alkali metal atom is preferably a lithium atom, a sodium atom, or a potassium atom, and is particularly preferably a sodium atom.

The polyorganosiloxane-containing polymer may contain an alkaline earth metal and aluminum due to the production method. Since an alkaline earth metal and aluminum are impurities, it is preferable that the contents of the alkaline earth metal and the aluminum in the polyorganosiloxane-containing polymer are small. However, the influence of the contents of the alkaline earth metal and the aluminum on the present invention is small. On the other hand, since the process may be complicated in a case of attempting to remove the alkaline earth metal and the aluminum from the polyorganosiloxane-containing polymer, the content of each of the alkaline earth metal and the aluminum in the polyorganosiloxane-containing polymer may be 150 ppm or more, may be 100 ppm or more, may be 50 ppm or more, may be 0 ppm or more, or may be 0 ppm, from the viewpoint of improving productivity.

(Polyorganosiloxane (A1))

The polyorganosiloxane (A1) is a polymer containing an organosiloxane unit. The term "organosiloxane unit" means an Si-O unit to which an organic group is bonded. The polyorganosiloxane has a structure represented by Formula (1).

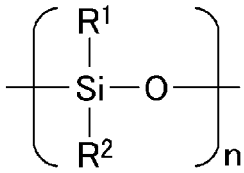 (1)

In Formula (1), $R^1$ and $R^2$ each independently represent a hydrogen atom, a halogen atom, or a monovalent organic group, and at least one of $R^1$ and $R^2$ is a monovalent organic group. n represents an integer of 2 or more.

The polyorganosiloxane (A1) can be obtained by polymerizing an organosiloxane mixture containing an organosiloxane. The organosiloxane mixture may further contain a component to be used as necessary.

Examples of the component to be used as necessary include a siloxane-based crosslinking agent, a siloxane-based crossing agent, and a siloxane oligomer having a terminal-blocking group.

Examples of the organosiloxane include a chain-like organosiloxane, an alkoxysilane compound, and a cyclic organosiloxane. An alkoxysilane compound or a cyclic organosiloxane is preferable, and a cyclic organosiloxane is more preferable due to the reason that the polymerization stability is high and the polymerization rate is high.

The alkoxysilane compound is preferably a difunctional alkoxysilane compound. Examples thereof include dimethyldimethoxysilane, dimethyldiethoxysilane, diethoxydiethylsilane, dipropoxydimethylsilane, diphenyldimethoxysilane, diphenyldiethoxysilane, methylphenyldimethoxysilane, and methylphenyldiethoxysilane. One kind of alkoxysilane compound (b) can be used alone or in a combination of two or more kinds thereof.

The cyclic organosiloxane is preferably a 3- to 7-membered cyclic organosiloxane. Examples thereof include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, and octaphenylcyclotetrasiloxane. One kind of cyclic organosiloxane can be used alone or in a combination of two or more kinds thereof. Octamethylcyclotetrasiloxane is preferable due to the reason that it is easy to control the particle diameter distribution.

From the viewpoint of obtaining the polymer (C) capable of further increasing the impact strength of the molded product, the organosiloxane is preferably at least one selected from the group consisting of a cyclic dimethylsiloxane and a difunctional dialkylsilane compound.

The term "cyclic dimethylsiloxane" is a cyclic siloxane having two methyl groups on the silicon atom. Examples thereof include hexamethylcyclotrisiloxane, octamethylcyclotetrasiloxane, decamethylcyclopentasiloxane, and dodecamethylcyclohexasiloxane. One kind of cyclic dimethylsiloxane can be used alone or in a combination of two or more kinds thereof.

The term "difunctional dialkylsilane compound" is a silane compound having two alkoxy groups and two alkyl groups on the silicon atom. Examples thereof include dimethyldimethoxysilane, dimethyldiethoxysilane, diethoxydiethylsilane, and dipropoxydimethylsilane. One kind of difunctional dialkylsilane compound can be used alone or in a combination of two or more kinds thereof.

The siloxane-based crosslinking agent is preferably a siloxane-based crosslinking agent having a siloxy group. Examples of the siloxane-based crosslinking agent include trifunctional or tetrafunctional silane-based crosslinking agent such as trimethoxymethylsilane, triethoxyphenylsilane, tetramethoxysilane, tetraethoxysilane, tetra-n-propoxysilane, and tetrabutoxysilane. A tetrafunctional crosslinking agent is preferable, and tetraethoxysilane is more preferable.

For improving the flame retardance, the proportion of the siloxane-based crosslinking agent in 100% by mass of the organosiloxane mixture, that is, the proportion of the constitutional unit derived from the siloxane-based crosslinking agent in 100% by mass of the polyorganosiloxane is not particularly limited. It is preferably 10% by mass or less, more preferably 3% by mass or less, still more preferably 0.5% by mass or less, and it may be 0% by mass. In a case where the proportion of the siloxane-based crosslinking agent is equal to or smaller than the above-described upper limit value, it is easy to make the impact strength of the molded product favorable.

The siloxane-based crossing agent has a siloxy group (-Si-O-) and a functional group polymerizable with a vinyl monomer. Examples of the siloxane-based crossing agent include a siloxane represented by Formula (I).

$$R\text{-}Si(R^1)_n(OR^2)_{(3-n)} \cdots \qquad (I)$$

In Formula (1), $R^1$ represents a methyl group, an ethyl group, a propyl group, or a phenyl group. $R^2$ represents

an organic group such as a hydrocarbon group, and it is, for example, preferably a methyl group, an ethyl group, a propyl group, or a phenyl group. n represents 0, 1, or 2. R represents a functional group represented by any one of Formulae (I-1) to (I-4).

$CH_2=C(R^3)-COO-(CH_2)_p- \cdots$ (I-1)

$CH_2=C(R^4)-C_6H_4- \cdots$ (I-2)

$CH_2=CH- \cdots$ (I-3)

$HS-(CH_2)_p- \cdots$ (I-4)

In these formulas, $R^3$ and $R^4$ each independently represent a hydrogen atom or a methyl group, and p represents an integer of 1 to 6.

Examples of the functional group represented by Formula (1-1) include a methacryloyloxyalkyl group. Specific examples of the siloxane represented by Formula (I-1) include β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane, and δ-methacryloyloxybutyldiethoxymethylsilane.

Examples of the functional group represented by Formula (I-2) include a vinylphenyl group. Examples of the siloxane having a group represented by Formula (1-2) include vinylphenylethyldimethoxysilane.

Examples of the siloxane having a functional group represented by Formula (I-3) include vinyltrimethoxysilane and vinyltriethoxysilane.

Examples of the functional group represented by Formula (1-4) include a mercaptoalkyl group. Examples of the siloxane having a group represented by Formula (I-4) include γ-mercaptopropyldimethoxymethylsilane, γ-mercaptopropylmethoxydimethylsilane, γ-mercaptopropyldiethoxymethylsilane, γ-mercaptopropylethoxydimethylsilane, and γ-mercaptopropyltrimethoxysilane.

One kind of siloxane-based crossing agent can be used alone or in a combination of two or more kinds thereof.

The siloxane-based crossing agent is preferably γ-methacryloyloxypropylmethyldimethoxysilane due to the reason that a sea-island structure is likely to be formed in a case where the polyorganosiloxane (A1) and the vinyl polymer (A2) are formed into a composite body.

When the organosiloxane mixture contains a siloxane-based crossing agent, the proportion of the siloxane-based crossing agent in 100% by mass of the organosiloxane mixture is preferably 0.05% by mass or more, more preferably 0.1% by mass or more, and still more preferably 0.5% by mass or more. The proportion of the siloxane-based crossing agent in 100% by mass of the organosiloxane mixture is preferably 20% by mass or less, more preferably 10% by mass or less, and still more preferably 5% by mass or less. The upper and lower limits thereof may be combined in any combination. For example, 0.05% to 20% by mass is preferable, 0.1% to 10%by mass is more preferable, and 0.5% to 5% by mass is still more preferable. In a case where the proportion of the siloxane-based graft crossing agent is within the ranges of the above-described upper limit value and the above-described lower limit value, it is possible to sufficiently form a covalent bond between the polyorganosiloxane (A1) and the vinyl polymer (A2), and it is possible to obtain the polymer (C) having a favorable impact strength.

The mass average particle diameter of the polyorganosiloxane (A1) is preferably 100 nm or more, more preferably 200 nm or more, and still more preferably 300 nm or more. The mass average particle diameter of the polyorganosiloxane (A1) is preferably 1,000 nm or less, more preferably 800 nm or less, and still more preferably 600 nm or less. The upper and lower limits thereof may be combined in any combination. For example, 100 to 1,000 nm is preferable, 200 to 800 nm is more preferable, and 300 to 600 nm is still more preferable. In a case where the mass average particle diameter of the polyorganosiloxane (A1) is within the ranges of the above-described upper limit value and the above-described lower limit value, the mass average particle diameter of the polymer (C) is easily adjusted within the ranges of the preferred upper limit value and lower limit value described above.

<Production method for polyorganosiloxane (A1)>

The production method for the polyorganosiloxane (A1) is not particularly limited, and it is possible to employ, for example, a production method (M) in which an organosiloxane mixture, which contains an organosiloxane, a siloxane-based crosslinking agent as necessary, a siloxane-based crossing agent as necessary, and a siloxane oligomer having a terminal-blocking group, as necessary, is emulsified with an emulsifying agent and water to prepare an emulsion, the organosiloxane mixture is polymerized in this emulsion at a high temperature in the presence of an acid catalyst, and then the acid catalyst is neutralized with an alkaline substance to obtain a latex of the polyorganosiloxane.

In the following description, the description will be made regarding a case where the "organosiloxane mixture" is used as a raw material for polymerization. The same production process can be applied to a case where the "organosiloxane" is used as a raw material for polymerization.

In the production method (M), examples of the preparation method for an emulsion include a method of forming fine particles with a shearing force due to highspeed rotation, for example, by using a homogenization mixer; and a method of forming fine particles with a jet force due to a high-pressure generator, for example, by carrying out mixing by high speed stirring using a homogenizer. A method using a homogenizer is preferable since it is easy to narrow the distribution of the particle diameter of the latex of the polyorganosiloxane.

Examples of the mixing method for an acid catalyst in the polymerization include a method in which an acid catalyst together with an organosiloxane mixture, an emulsifying agent, and water is collectively added and mixed (a method 1); a method in which an aqueous acid catalyst solution is collectively added to an emulsion of an organosiloxane mixture (a method 2); and a method in which an emulsion of an organosiloxane mixture is dropwise added and mixed in a high-temperature aqueous acid catalyst solution at a constant rate (a method 3). The method 3 is preferable due to the reason that the particle diameter of the polyorganosiloxane is easily controlled.

The polymerization temperature is preferably 50°C or higher and more preferably 70°C or higher. The upper limit of the polymerization temperature is, for example, 100°C.

When carrying out polymerization using the method 3, the polymerization time is usually 2 hours or more and is preferably 5 hours or more.

The crosslinking reaction between silanols proceeds at a temperature of 30°C or lower. Therefore, after polymerization at a high temperature of 50°C or higher, it is also possible to maintain the generated latex at a temperature of 30°C or lower for 5 hours to 100 hours in order to increase the crosslinking density of the polyorganosiloxane.

The polymerization reaction of the organosiloxane mixture can be completed by neutralizing the reaction system containing the latex to a pH of 6 or more and 8 or less with an alkaline substance such as sodium hydroxide, potassium hydroxide, or an aqueous ammonia solution.

The emulsifying agent is not particularly limited as long as the organosiloxane mixture can be emulsified, and it is preferably an anionic emulsifying agent or a nonionic emulsifying agent.

Examples of the anionic emulsifying agent include sodium alkylbenzenesulfonate, sodium alkyldiphenyl ether disulfonate, sodium alkyl sulfate, sodium polyoxyethylene alkyl sulfate, and sodium polyoxyethylene nonylphenyl ether sulfate.

Examples of the nonionic emulsifying agent include a polyoxyethylene alkyl ether, a polyoxyethylene alkylene alkyl ether, a polyoxyethylene distyrene phenyl ether, a polyoxyethylene tribenzylphenyl ether, and a polyoxyethylene polyoxypropylene glycol.

One kind of emulsifying agent can be used alone or in a combination of two or more kinds thereof.

The using amount of the emulsifying agent is preferably 0.05 parts by mass or more, and more preferably 0.1 parts by mass or more with respect to 100 parts by mass of the organosiloxane mixture. The using amount of the emulsifying agent is preferably 20 parts by mass or less and more preferably 10 parts by mass or less with respect to 100 parts by mass of the organosiloxane mixture. The upper and lower limits thereof may be combined in any combination. For example, 0.05 to 20 parts by mass is preferable, and 0.1 to 10 parts by mass is more preferable. The particle diameter of the latex of the polyorganosiloxane can be adjusted to a desired value according to the using amount of the emulsifying agent. The particle diameter can be reduced by increasing the amount of the emulsifying agent, or the particle diameter can be increased by decreasing the amount of the emulsifying agent. In a case where the using amount of the emulsifying agent is equal to or larger than the above-described lower limit value, it is possible to increase the emulsification stability of the emulsion of the organosiloxane mixture. In a case where the using amount of the emulsifying agent is equal to or smaller than the above-described upper limit value, the heat-discoloration resistance and the external appearance of the surface of the molded product are excellent.

Examples of the acid catalyst that is used in the polymerization of the organosiloxane mixture include sulfonic acids such as an aliphatic sulfonic acid, an aliphatic-substituted benzenesulfonic acid, and an aliphatic-substituted naphthalenesulfonic acid; and mineral acids such as sulfuric acid, hydrochloric acid, and nitric acid. One kind of acid catalyst can be used alone or in a combination of two or more kinds thereof. In a case where mineral acids are used, it is easy to narrow the distribution of the particle diameter of the latex of the polyorganosiloxane, and further, it is easy to suppress the occurrence of defects (the decrease in the resistance to thermal decomposability of the molded product, poor external appearance, and the like) due to the emulsifying agent component in the polyorganosiloxane latex.

The using amount of the acid catalyst is preferably 0.005 parts by mass or more and 40 parts by mass or less with respect to 100 parts by mass of the organosiloxane. In a case where the using amount of the acid catalyst is 0.005 parts by mass or more, the organosiloxane mixture can be polymerized in a short time. In a case where the using amount of the acid catalyst is 40 parts by mass or less, the heat-discoloration resistance and the external appearance of the surface of the molded product are excellent.

The using amount of the acid catalyst is a factor that determines the particle diameter of the polyorganosiloxane

(A1). Therefore, in order to obtain the polyorganosiloxane (A1) having a particle diameter described below, the using amount of the acid catalyst is preferably set to 1 part by mass or more and 30 parts by mass or less with respect to 100 parts by mass of the organosiloxane. It is noted that in a case where the using amount of the acid catalyst is small, the particle diameter tends to be large.

As necessary, an emulsifying agent may be added to the latex of the polyorganosiloxane obtained by the production method (M) for the intended purpose of improving mechanical stability. The emulsifying agent is preferably the same anionic emulsifying agents and nonionic emulsifying agents as those exemplified above.

(Vinyl polymer (A2))

The polymer (A) may contain the vinyl polymer (A2). When the polymer (A) contains the vinyl polymer (A2), the polymer (A) may be a polymer in which the vinyl polymer (A2) and the polyorganosiloxane (A1) are crosslinked or may be a composite polymer in which the polyorganosiloxane (A1) and the vinyl polymer (A2) are not crosslinked, where it is preferable that the vinyl polymer (A2) and the polyorganosiloxane (A1) are crosslinked.

The vinyl polymer (A2) is a polymer obtained by polymerizing a vinyl monomer component (a2). That is, the vinyl polymer (A2) contains a vinyl monomer unit derived from the vinyl monomer component (a2).

The vinyl monomer component (a2) constituting the first vinyl polymer (A2) may be one kind of vinyl monomer or may be two or more kinds of vinyl monomers.

From the viewpoint of the impact strength of the molded product, the vinyl monomer component (a2) preferably contains a (meth)acrylate monomer (hereinafter, also denoted as a "monomer (a2-1)").

The monomer (a2-1) is not particularly limited, and preferred examples thereof include a (meth)acrylate in which the alkyl group has 1 or more and 20 or less carbon atoms. Examples thereof include alkyl acrylates such as methyl acrylate, ethyl acrylate, n-propyl acrylate, n-butyl acrylate, 2-ethylhexyl acrylate, and n-octyl acrylate; and alkyl methacrylates such as methyl methacrylate, ethyl methacrylate, n-propyl methacrylate, n-butyl methacrylate, i-butyl methacrylate, t-butyl methacrylate, hexyl methacrylate, 2-ethylhexyl methacrylate, lauryl methacrylate, tridecyl methacrylate, and stearyl methacrylate.

The (meth)acrylate is preferably an alkyl acrylate having 1 or more and 20 or less carbon atoms. Due to the reason that the impact strength of the molded product is more favorable, the alkyl group of the alkyl acrylate preferably has 2 or more carbon atoms, more preferably has 3 or more carbon atoms, and still more preferably 4 or more carbon atoms, and it more preferably has 16 or less carbon atoms, more preferably 12 or less carbon atoms, and still more preferably 8 or less carbon atoms. n-butyl acrylate is particularly preferable.

One kind of monomer (a2-1) can be used alone or in a combination of two or more kinds thereof.

When the vinyl monomer component (a2) contains the monomer (a2-1), it may contain another monomer. Examples of the other monomer include a polyfunctional monomer (hereinafter, also denoted as a "monomer (a2-2)") capable of being copolymerized with the monomer (a2-1). From the viewpoint of the impact strength of the molded product, the vinyl monomer component (a2) preferably contains the monomer (a2-1) and the monomer (a2-2).

The monomer (a2-2) is not particularly limited, and examples thereof include (meth)acrylate and cyanurate. Examples of the (meth)acrylate include ethylene glycol dimethacrylate, propylene glycol dimethacrylate, ethylene glycol diacrylate, propylene glycol diacrylate, and allyl methacrylate. Examples of the cyanurate include triallyl cyanurate and triallyl isocyanurate.

Due to the reason that the impact strength of the molded product is more favorable, allyl methacrylate, triallyl cyanurate, or triallyl isocyanurate is preferable, and allyl methacrylate is more preferable.

One kind of monomer (a2-2) can be used alone or in a combination of two or more kinds thereof.

The proportion of the monomer (a2-1) in 100% by mass of the vinyl monomer component (a2) is not particularly limited, and it is preferably 60% by mass or more, more preferably 70% by mass or more, still more preferably 80% by mass or more, and particularly preferably 90% by mass or more, from the viewpoint of improving the impact strength of the molded product. The proportion of the monomer (a2-1) in 100% by mass of the vinyl monomer component (a2) is 100% by mass or less and is preferably 99.9% by mass or less. The upper and lower limits thereof may be combined in any combination. For example, 60% to 100% by mass is preferable, 70% to 100% by mass is more preferable, 80% to 99.9% by mass is still more preferable, and 90% to 99.9% by mass is particularly preferable.

The proportion of the monomer (a2-2) in 100% by mass of the vinyl monomer component (a2) is not particularly limited, and it is preferably 0.1% by mass or more and more preferably 2% by mass or less in order to improve the impact strength.

The vinyl monomer component (a2) may contain another monomer (a2-3) other than the monomer (a2-1) and the monomer (a2-2). The other monomer (a2-3) is not particularly limited, and examples thereof include an aromatic vinyl monomer, a vinyl cyanide monomer, and a (meth)acrylic group-modified silicone.

The aromatic vinyl monomer is not particularly limited, and examples thereof include styrene and $\alpha$-methylstyrene.

The vinyl cyanide monomer is not particularly limited, and examples thereof include acrylonitrile and methacrylonitrile.

One kind of other monomer (a2-3) can be used alone or in a combination of two or more kinds thereof.

(Polymer (A))

The polymer (A) includes the polyorganosiloxane (A1) and the vinyl polymer (A2). It is preferable that the polymer (A) has a function as a composite rubber of the polyorganosiloxane (A1) and the vinyl polymer (A2). For the function as the composite rubber, the glass transition temperature (hereinafter, may be referred to as Tg) of each of the polyorganosiloxane (A1) and the vinyl polymer (A2) is preferably 0°C or lower.

The mass ratio represented by "polyorganosiloxane (A1)/vinyl polymer (A2)" in the polymer (A) is preferably 50/50 or more and more preferably 70/98 or more, and it is preferably 99/1 or less and more preferably 95/5 or less, from the viewpoint of the impact strength and the flame retardance of the molded product. The upper and lower limits thereof may be combined in any combination. For example, 50/50 to 99/1 is preferable, and 70/98 to 95/5 is more preferable.

(Production method for polymer (A))

The production method for the polymer (A) is not particularly limited, and it is preferably a method of polymerizing the vinyl monomer component (a2) that constitutes the vinyl polymer (A2), in the presence of the latex containing the polyorganosiloxane (A1) due to the reason that the impact strength of the molded product is excellent.

The method of polymerizing the vinyl monomer component (a2) in the presence of the latex containing the polyorganosiloxane (A1) is not particularly limited. Examples thereof include a method in which the vinyl monomer component (a2) is dropwise added to the latex containing the polyorganosiloxane (A1) (a method (i); a method in which a part of the vinyl monomer component (a2) is added to the latex containing the polyorganosiloxane (A1) under conditions in which polymerization is not started, the particles of the polyorganosiloxane (A1) is impregnated with the resultant mixture, and then the polymerization is started, and the remainder of the vinyl monomer component (a2) is subsequently added dropwise or collectively to carry out polymerization (a method ii); and a method in which the entire amount of the vinyl monomer component (a2) is added to the latex containing the polyorganosiloxane (A1) under conditions in which polymerization is not started, the particles of the polyorganosiloxane (A1) is impregnated with the resultant mixture, and then polymerization is carried out (a method iii).

The method iii is preferable due to the reason that the impact strength of the molded product is excellent.

The production method for the vinyl polymer (A2) is not particularly limited, and examples thereof include a method of polymerizing the vinyl monomer (a2) by an emulsion polymerization method, a suspension polymerization method, or a fine suspension polymerization method, where an emulsion polymerization method is preferable.

As the radical polymerization initiator that is used in the polymerization of the vinyl monomer (a2), the following initiators are used: an azo-based initiator; a peroxide; and a redox-based initiator obtained by combining a peroxide and a reducing agent. One kind of radical polymerization initiator can be used alone or in a combination of two or more kinds thereof. An azo-based initiator or a redox-based initiator is preferable.

Examples of the azo-based initiator include oil-soluble azo-based initiators such as 2,2'-azobisisobutyronitrile, dimethyl 2,2-azobis(2-methylpropionate), 2,2'-azobis(2,4-dimethylvaleronitrile), and 2,2'-azobis(2-butyronitrile); and water-soluble azo-based initiators such as 4,4'-azobis(4-cyanovaleric acid), 2,2'-azobis[N-(2-carboxymethyl)-2-methylpropionamidine] hydrate, 2,2'-azobis-(N, N'-dimethyleneisobutylamidine) dihydrochloride, and 2,2'-azobis[2-(2-imidazolin-2-yl)propane] dihydrochloride. One kind of these can be used alone or in a combination of two or more kinds thereof.

Examples of the peroxide include inorganic peroxides such as hydrogen peroxide, potassium persulfate; and ammonium persulfate, and organic peroxides such as diisopropylbenzene hydroperoxide, p-menthane hydroperoxide, cumene hydroperoxide, t-butyl hydroperoxide, succinic acid peroxide, t-butylperoxyneodecanoate, t-butylperoxyneoheptanoate, t-butylperoxypivalate, 1,1,3,3-tetramethylbutylperoxy-2-ethylhexanoate, and t-butylperoxy-2-ethylhexanoate. One kind of peroxide can be used alone or in a combination of two or more kinds thereof.

When combining a peroxide with a reducing agent to obtain a redox-based initiator, it is preferable to use, in combination, the above-described peroxide, a reducing agent such as sodium formaldehyde sulfoxylate, L-ascorbic acid, fructose, dextrose, sorbose, or inositol, and ferrous sulfate/disodium ethylenediaminetetraacetic acid. One kind of redox-based initiator can be used alone or in a combination of two or more kinds thereof.

Since it is easy to obtain a graft copolymer having excellent impact resistance, the radical polymerization initiator that is used in the polymerization of the vinyl monomer (a2) is preferably a radical polymerization initiator of which the solubility in water at 20°C is 5% by mass or less, and more preferably a radical polymerization initiator of which the solubility in water at 20°C is 2% by mass or less.

Examples of the radical polymerization initiator of which the solubility in water at 20°C is 5% by mass or less

include cumene hydroperoxide, diisopropylbenzene hydroperoxide, p-menthane hydroperoxide, t-butylperoxyneodecanoate, t-butylperoxyneoheptanoate, t-butylperoxypivalate, 1,1,3,3-tetramethylbutylperoxy-2-ethylhexanoate, t-butylperoxy-2-ethylhexanoate, 2,2'-azobisisobutyronitrile, dimethyl 2,2'-azobis(2-methylpropionate), 2,2'-azobis(2,4-dimethylvaleronitrile), and 2,2'-azobis(2-butyronitrile) One kind of the radical polymerization initiator of which the solubility in water at 20°C is 5% by mass or less can be used alone or in a combination of two or more kinds thereof.

The solubility of the radical polymerization initiator in water at 20°C can be known from catalogs or the like of various radical polymerization initiators.

When an azo-based initiator is used as the radical polymerization initiator, the using amount of the azo-based initiator is preferably 0.01 to 1 part by mass with respect to the total of 100 parts by mass of the monomers.

When a redox-based initiator is used as the radical polymerization initiator, the using amount of the peroxide is preferably 0.01 to 1 part by mass with respect to the total of 100 parts by mass of the monomers. When a redox-based initiator is used as the radical polymerization initiator, the using amount of the reducing agent is preferably 0.01 to 1 part by mass with respect to the total of 100 parts by mass of the monomers.

(Vinyl polymer (B))

The vinyl polymer (B) is a polymer obtained by polymerizing the vinyl monomer component (b) and is a polymer containing a constitutional unit derived from the vinyl monomer.

The vinyl monomer component (b) constituting the vinyl polymer (B) may be any vinyl monomer of one or more kinds.

The vinyl monomer constituting the vinyl monomer component (b) is not particularly limited; however, preferred examples thereof include a (meth)acrylate monomer.

The (meth)acrylate monomer is not particularly limited, and examples thereof include an alkyl (meth)acrylate. When one or more kinds of vinyl monomers contain an alkyl (meth)acrylate such as a methyl (meth)acrylate, a graft copolymer to be obtained tends to have excellent compatibility and dispersibility in a thermoplastic resin such as a polycarbonate-based resin. Examples of the alkyl (meth)acrylate include alkyl methacrylates such as methyl methacrylate, ethyl methacrylate, n-butyl methacrylate, and i-butyl methacrylate; and methyl acrylate, ethyl acrylate, and n-butyl acrylate.

One kind of (meth)acrylate monomer may be used alone, or two or more kinds thereof may be used in combination. The number of carbon atoms of the alkyl group of the alkyl (meth)acrylate is not particularly limited, and it is preferably 1 or more, more preferably 12 or less, still more preferably 6 or less, and even still more preferably 4 or less. The upper and lower limits thereof may be combined in any combination. For example, 1 to 12 is preferable, 1 to 6 is more preferable, and 1 to 4 is still more preferable. Methyl methacrylate is particularly preferable.

The vinyl monomer component (b) further contains one or more monomers selected from the group consisting of a polyfunctional vinyl monomer, an aromatic vinyl monomer, and a vinyl cyanide monomer.

Examples of the polyfunctional vinyl monomer include allyl (meth)acrylate, triallyl cyanurate, divinylbenzene, diallyl phthalate, and ethylene glycol di(meth)acrylate. One kind of polyfunctional vinyl monomer may be used alone, or two or more kinds thereof may be used in combination.

The aromatic vinyl monomer is not particularly limited, and examples thereof include styrene and $\alpha$-methylstyrene. One kind of aromatic vinyl monomer may be used alone, or two or more kinds thereof may be used in combination.

The vinyl cyanide monomer is not particularly limited, and examples thereof include acrylonitrile and methacrylonitrile. One kind of vinyl cyanide monomer may be used alone, or two or more kinds thereof may be used in combination.

The proportion of the (meth)acrylate monomer in 100% by mass of the vinyl polymer (B) is preferably 50% by mass or more, more preferably 70% by mass or more, still more preferably 80% by mass or more, and particularly preferably 90% by mass or more, and it may be 100% by mass.

The Tg of the vinyl polymer (B) is preferably 70°C or higher, more preferably 80°C or higher, still more preferably 90°C or higher, and it is preferably 105°C or lower. The upper and lower limits thereof may be combined in any combination. 70°C to 105°C is preferable, 80°C to 105°C is more preferable, and 90°C to 105°C is still more preferable. In a case where Tg of the vinyl polymer (B) is equal to or larger than the above-described lower limit value, the fluidity or the like of the powder of the polymer (C) to be obtained is favorable.

The Tg of the vinyl polymer (B) can be adjusted depending on the kind and ratio of the vinyl monomer constituting the vinyl monomer component (b).

The Tg of the vinyl polymer (B) can be determined by the FOX expression. In this case, for the Tg of the homopolymer of the vinyl monomer constituting the vinyl monomer component (b), it is possible to use, for example, the value described in "POLYMER HANDBOOK" (Wiley, Interscience Inc./1999) can be used. The Tg of a homopolymer of a vinyl monomer, which is not described in this document, can be calculated using the Bicerano's method "Prediction of Polymer Properties" (MARCEL DEKKER/2002).

(Production method for polymer (C))

The polymer (C) can be produced, for example, by subjecting the vinyl monomer component (b) to polymerization (graft polymerization) in the presence of the polymer (A). As a result, a polymer in which a part or whole of the vinyl polymer (B) is grafted to the polymer (A) is obtained.
The production method for the polymer (C) is not particularly limited and is preferably a method in which the vinyl monomer component (b) is added to a latex of the polymer (A), and the vinyl monomer component (b) is polymerized in the latex. The latex of the polymer (A) is preferably produced by polymerizing the vinyl monomer component (a2) in the presence of the latex containing the polyorganosiloxane (A1).
The conditions for polymerizing the vinyl monomer component (b) are not particularly limited, and conventional conditions can be applied. Examples thereof include conditions of 45°C to 95°C and 0.1 to 10 hours.
The method of adding the vinyl monomer component (b) to the latex of the polymer (A) is not particularly limited, and it is preferable to dropwise add the vinyl monomer component (b) due to the reason that the generation of cullet can be suppressed. The entire amount of the vinyl monomer component (b) may be continuously added dropwise, or the vinyl monomer component (b) may be dividedly added dropwise in a plurality of times while setting a holding time during which the vinyl monomer (b) is not added dropwise.
After polymerizing the vinyl monomer component (b), it is preferable to recover the polymer (C) as a powder (or a powder group or a powder group containing impurities) from the latex of the obtained polymer (C).
When recovering the polymer (C) as a powder, it is possible to use a direct drying method such as a spray drying method or a solidification method. In the direct drying method, auxiliary agents added during polymerization can be usually allowed to remain in the obtained powder. In the solidification method, in the washing step after coagulation, it is possible to reduce the residues of the polymerization auxiliary agent contained in the obtained powder, such as the emulsifying agent used during polymerization or a coagulation salt thereof, and an initiator. A powder recovery method can be appropriately selected so that a desired residual state is obtained in a case where the polymer (C) is added to the thermoplastic resin.
The spray drying method, which is a direct drying method, is a method in which the latex of the polymer (C) is sprayed into a dryer in the form of fine liquid droplets and dried by being applied with a heating gas for drying. Examples of the method of generating fine liquid droplets include a rotary disk method, a pressurized nozzle method, a two-flow nozzle method, and a pressurized two-flow nozzle method. The capacity of the dryer may be any capacity from a small capacity such as a capacity that is used in a laboratory to a large capacity such as a capacity that is used industrially. The temperature of the heating gas for drying is preferably 200°C or lower and more preferably 120 to 180°C. Latexes of two or more kinds of graft copolymers that are produced separately can also be subjected to spray drying together. In order to improve powder characteristics such as blocking and bulk specific gravity during spray drying, it is also possible to add an optional component such as silica to the latex of the polymer (C) and then carry out spray drying.
The solidification method is a method of coagulating the latex of the polymer (C) to separate, recover, and dry the polymer (C). The latex of the polymer (C) is added to hot water in which a solidifying agent has been dissolved, salted out, and solidified to separate the polymer (C), and the separated polymer (C) in a wet state is subjected to dehydration or the like to recover the polymer (C) having a reduced moisture content. The recovered polymer (C) is dried using a squeeze dehydrator or a hot air dryer.
Examples of the solidifying agent include inorganic salts such as aluminum chloride, aluminum sulfate, sodium sulfate, magnesium sulfate, sodium nitrate, and calcium acetate; and acids such as sulfuric acid, where calcium acetate is preferable. One kind of solidifying agent can be used alone or in a combination of two or more kinds thereof.
When the solidifying agent is used as an aqueous solution, the concentration of the aqueous solidifying agent solution is preferably 0.1% by mass or more and more preferably 1% by mass or more from the viewpoint of stably solidifying and recovering the polymer (C). The concentration of the aqueous solidifying agent solution is more preferably 20% by mass or less and more preferably 15% by mass or less from the viewpoint of reducing the amount of the solidifying agent remaining in the recovered polymer (C) to prevent the deterioration of the external appearance of the molded product. The upper and lower limits thereof may be combined in any combination. For example, 0.1% to 20% by mass is preferable, and 1% to 15% by mass is more preferable.
The amount of the aqueous solidifying agent solution is not particularly limited and is preferably 10 parts by mass or more and 500 parts by mass or less with respect to 100 parts by mass of the latex of the polymer (C).
A method of bringing the latex of the polymer (C) into contact with the aqueous solidifying agent solution is not particularly limited, and examples thereof include the following methods.

(1) A method of continuously adding a latex to an aqueous solidifying agent solution while stirring the aqueous solidifying agent solution and then holding the resultant mixture for a certain period of time,
(2) A method of bringing an aqueous solidifying agent solution and a latex into contact with each other while being continuously injected into a container equipped with a stirrer at a constant ratio, and continuously extracting a mixture

containing a coagulated polymer and water from the container.

The temperature at which a latex is brought into contact with an aqueous solidifying agent solution is not particularly limited and is preferably 30°C or higher and 100°C or lower. The contact time is not particularly limited.
The coagulated polymer (C) is washed with water about 1 to 100 times by mass the polymer (C) and separated by filtration. The polymer (C) in a wet state, which has been separated by filtration, is dried using a flow dryer, a squeeze dehydrator, or the like. The drying temperature and the drying time may be appropriately determined depending on the polymer (C) to be obtained.
The polymer (C) discharged from the squeeze dehydrator or an extruder may be, without being recovered, sent directly to an extruder or molding machine which produces a resin composition and mixed with a thermoplastic resin to obtain a molded product.
A powder of the polymer (C) can be obtained by drying the obtained polymer (C). However, the amount of the alkali metal atoms in the powder of the polymer (C) can be increased by a treatment with an alkali metal salt solution. Specifically, deionized water is added to a powder of the polymer (C) and stirred, an aqueous alkali metal salt solution is subsequently added thereto and stirred, and then filtration, washing, dehydration, and drying are carried out, whereby it is possible to obtain a powder of the polymer (C) containing more alkali metal atoms. In a case where the alkali metal salt concentration of the alkali metal salt solution is increased, the atomic weight of the alkali metal atom contained in the powder of the polymer (C) tends to be increased.
The proportion of the polyorganosiloxane (A1) in 100% by mass of the polymer (C) is preferably less than 100% by mass and more preferably 98% by mass or less. The proportion of the polyorganosiloxane (A1) in 100% by mass of the polymer (C) is preferably 50% by mass or more, more preferably 70% by mass or more, still more preferably 90% by mass or more, and particularly preferably 95% by mass or more. The upper and lower limits thereof may be combined in any combination. For example, 50% by mass or more and less than 100% by mass is preferable, 70% by mass or more and less than 100% by mass is more preferable, 70% to 98% by mass is still more preferable, 90% to 98% by mass or more is even still more preferable, and 95% to 98% by mass or more is particularly preferable. In a case where the proportion of the polyorganosiloxane (A1) is equal to or larger than the above-described lower limit value, the impact strength of the molded product is excellent. In a case where it is equal to or smaller than the above-described upper limit value, the colored external appearance of the molded product is excellent.
The proportion of the polymer (A) in 100% by mass of the polymer (C) is preferably 60% by mass or more and more preferably 70% by mass or more. The proportion of the polymer (A) in 100% by mass of the polymer (C) is preferably 95% by mass or less and more preferably 90% by mass or less. The upper and lower limits thereof may be combined in any combination. For example, 60% to 95% by mass is preferable, and 70% to 90% by mass is more preferable. In a case where the content of the polymer (A) is equal to or larger than the above-described lower limit value, the impact strength and flame retardance of the molded product are excellent. In a case where it is equal to or smaller than the above-described upper limit value, the dispersibility of the polymer (C) in the thermoplastic resin is excellent, and the external appearance of the molded product to be obtained is excellent.
The proportion of the graft part in 100% by mass of the polymer (C) is preferably 5% by mass or more, more preferably 7.5% by mass or more, and still more preferably 10% by mass or more. The proportion of the graft part in 100% by mass of the polymer (C) is preferably 20% by mass or less, more preferably 17.5% by mass or less, and still more preferably 15% by mass or less. The upper and lower limits thereof may be combined in any combination. For example, 5% to 20% by mass is preferable, 7.5% to 17.5% by mass is more preferable, and 10% to 15% by mass is still more preferable. In a case where the content of the graft part is equal to or larger than the above-described lower limit value, the dispersibility of the polymer (C) in the thermoplastic resin is excellent, and the external appearance of the molded product to be obtained is excellent. In a case where it is equal to or smaller than the above-described upper limit value, the impact strength of the molded product is excellent.
The proportion of the vinyl polymer (B) in 100% by mass of the polymer (C) is preferably 5% by mass or more and more preferably 10% by mass or more. The proportion of the vinyl polymer (B) in 100% by mass of the polymer (C) is preferably 40% by mass or less and more preferably 35% by mass or less. The upper and lower limits thereof may be combined in any combination. For example, 5% to 40% by mass is preferable, and 10% to 35% by mass is more preferable. In a case where the content of the vinyl polymer (B) is equal to or larger than the above-described lower limit value, the dispersibility of the polymer (C) in the thermoplastic resin is excellent, and the external appearance of the molded product to be obtained is excellent. In a case where it is equal to or smaller than the above-described upper limit value, the impact strength of the molded product is excellent.

<Resin composition>

A resin composition according to one aspect of the present invention (hereinafter also referred to as "the present resin composition") contains a polymer (C) and a thermoplastic resin (hereinafter, also denoted as a "thermoplastic resin

(D)").

The thermoplastic resin (D) is not particularly limited, and examples thereof include an engineering plastic (an aromatic polycarbonate or the like), a styrene-based resin, a polyester resin, an olefin-based resin (polyethylene or the like), a thermoplastic elastomer, a biodegradable resin, a halogen-based resin (a vinyl chloride resin or the like), and an acrylic resin.

As the engineering plastic, various known thermoplastic engineering plastics can be used without particular limitation.

Examples of the engineering plastic include a polyphenylene ether, polycarbonate, a polyester-based polymer (polyethylene terephthalate, polybutylene terephthalate, or the like), syndiotactic polystyrene, a nylon-based polymer (6-nylon, 6,6-nylon, or the like), polyarylate, a polyphenylene sulfide, a polyether ketone, a polyether ether ketone, polysulfone, polyether sulfone, polyamideimide, polyetherimide, and polyacetal.

Examples of the engineering plastic in the present invention also include a special styrene-based resin such as a heat-resistant ABS and a heat-resistant acrylic resin, which are highly excellent in heat resistance and in which melting fluidity is required. When the strength exhibition is more required, an aromatic polycarbonate or polybutylene terephthalate is more preferable.

Examples of the aromatic polycarbonate include a 4,4'-dioxydiarylalkane-based polycarbonate such as a 4,4'-dihydroxydiphenyl-2,2-propane (bisphenol A)-based polycarbonate.

Examples of the olefin-based resin include high density polyethylene; medium density polyethylene; low density polyethylene; a copolymer of ethylene and another α-olefin; polypropylene; a copolymer of propylene and another α-olefin; polybutene; and poly-4-methylpentene-1.

Examples of the thermoplastic elastomer include a styrene-based elastomer, a urethane-based elastomer, a polyolefin-based elastomer, a polyamide-based elastomer, a fluorine-based elastomer, a chlorinated PE-based elastomer, and an acrylic-based elastomer.

Examples of the styrene-based elastomer include a styrene-butadiene-styrene copolymer (SBS), a styrene-isoprene-styrene copolymer (SIS), a styrene-ethylene-butene copolymer (SEB), a styrene-ethylene/propylene copolymer (SEP), a styrene-ethylene/butene-styrene copolymer (SEBS), a styrene-ethylene/propylene-styrene copolymer (SEPS), a styrene-ethylene/ethylene/propylene-styrene copolymer (SEEPS), a styrene-butadiene/butylene-styrene copolymer (a partially hydrogenated product of a styrene-butadiene-styrene copolymer: SBBS), a partially hydrogenated product of an SIS copolymer, and a partially hydrogenated product of a styrene-isoprene/butadiene-styrene copolymer. Here, "-" indicates that monomers forming the units linked by "-" are copolymerized, and "/" indicates that the corresponding copolymer is present after being randomly modified by hydrogenation or the like after the copolymerization.

Examples of the urethane-based elastomer include a reaction product of a polymeric diol, an organic diisocyanate, and a chain extension agent.

Examples of the polymeric diol include a polyester diol, a polyether diol, a polyester ether diol, a polycarbonate diol, and a polyester polycarbonate diol.

Examples of the organic diisocyanate include 4,4'-diphenylmethane diisocyanate, toluene diisocyanate, p-phenylene diisocyanate, xylylene diisocyanate, naphthalene diisocyanate, hydrogenated 4,4'-diphenylmethane diisocyanate (4,4'-dicyclohexylmethane diisocyanate), isophorone diisocyanate, and hexamethylene diisocyanate, where 4,4'-diphenylmethane diisocyanate is preferable.

Examples of the chain extension agent include ethylene glycol, diethylene glycol, 1,4-butanediol, 1,5-pentanediol, 2-methyl-1,3-propanediol, 1,6-hexanediol, neopentyl glycol, 1,9-nonanediol, cyclohexanediol, and 1,4-bis(β-hydroxyethoxy)benzene.

Examples of the polyolefin-based elastomer include an ethylene-propylene rubber, an ethylene-propylene-diene rubber, an ethylene-vinyl acetate copolymer, a butyl rubber, a butadiene rubber, a propylene-butene copolymer, and an ethylene-acrylic acid ester copolymer.

Examples of the styrene-based resin include polystyrene, an acrylonitrile-styrene copolymer, an acrylonitrile-styrene-α-methylstyrene copolymer, an acrylonitrile-methyl methacrylate-styrene-α-methylstyrene copolymer, an ABS resin, an AS resin, an MABS resin, an MBS resin, an AAS resin, an AES resin, an acrylonitrile-butadiene-styrene-α-methylstyrene copolymer, an acrylonitrile-methyl methacrylate-butadiene-styrene-α-methylstyrene copolymer, a styrene-maleic acid anhydride copolymer, a styrene-maleimide copolymer, a styrene-N-substituted maleimide copolymer, an acrylonitrile-styrene-N-substituted maleimide copolymer, an acrylonitrile-butadiene-styrene-β-isopropenylnaphthalene copolymer, and an acrylonitrile-methyl methacrylate-butadiene-styrene-α-methylstyrene-maleimide copolymer.

The polyester resin is a polymer of a polybasic acid and a polyhydric alcohol and is not particularly limited on the condition that the polyester resin has thermoplasticity. Examples of the polybasic acid include terephthalic acid, naphthalene dicarboxylic acid, cyclohexane dicarboxylic acid, and esters thereof. Examples of the polyhydric alcohol include ethylene glycol, propylene glycol, butanediol, pentanediol, neopentyl glycol, hexanediol, octanediol, decanediol, cyclohexanedimethanol, hydroquinone, bisphenol A, 2,2-bis(4-hydroxyethoxyphenyl)propane, 1,4-dimethyloltetrabromobenzene, and tetrabromobisphenol A bis(2-hydroxyethyl) ether (TBA-EO).

The polyester resin may be a homopolymer, a copolymer, or a blend of two or more thereof.

As the polyester resin, a commercially available product such as "PETG" (product name), manufactured by Eastman Chemical Company may be used.

Examples of the biodegradable resin include a microbial polymer, a chemical synthesis-based polymer, and a natural product-based polymer.

Examples of the microbial polymer include biopolyester such as polyhydroxybutyrate/valerate (PHB/V), bacterial cellulose, and microbial polysaccharide (pullulan, curdlan, or the like).

Examples of the chemical synthesis-based polymer include an aliphatic polyester (polycaprolactone, polybutylene succinate, polyethylene succinate, polyglycolic acid, polylactic acid, or the like), polyvinyl alcohol, and a polyamino acid (PMLG or the like).

Examples of the natural product-based polymer include chitosan, cellulose, starch, and cellulose acetate.

Examples of the halogen-based resin include a homopolymer of vinyl chloride, a copolymer containing vinyl chloride at proportion of 80% by mass or more, and a vinyl chloride resin such as highly chlorinated polyvinyl chloride. Examples of the component of the copolymer include, in addition to vinyl chloride, monovinylidene compounds such as ethylene, vinyl acetate, methyl methacrylate, and butyl acrylate. In the copolymer, the proportions of constitutional units derived from these compounds may be 20% by mass or less.

Examples of the halogen-based resin include, in addition to the vinyl chloride resin, a fluorinated polymer, a brominated polymer, and an iodated polymer.

Examples of the acrylic resin include a copolymer obtained by polymerizing methyl methacrylate and a copolymerizable vinyl monomer. Examples of the copolymerizable vinyl monomer include alkyl acrylates such as methyl acrylate, ethyl acrylate, i-propyl acrylate, n-butyl acrylate, and 2-ethylhexyl acrylate, alkyl methacrylates such as ethyl methacrylate, propyl methacrylate, and n-butyl methacrylate, and aromatic vinyl compounds such as styrene, $\alpha$-methylstyrene, and vinyl toluene.

Polymer alloys between polyester-based resins such as polyphenylene ether, polycarbonate, polyethylene terephthalate, and polybutylene terephthalate, polyamide-based resins such as syndiotactic polystyrene, 6-nylon, and 6,6-nylon, engineering plastics such as polyarylate, polyphenylene sulfide, a polyether ketone, a polyether ether ketone, polysulfone, polyether sulfone, polyamideimide, polyetherimide, and polyacetal, and other thermoplastic resins are also included in the range of the thermoplastic resin (D).

One kind of thermoplastic resin (D) can be used alone or in a combination of two or more kinds thereof.

Due to the reason that the thermoplastic resin (D) is industrially easily available and the balance between the impact strength and the colorability of the molded product is excellent, the thermoplastic resin (D) preferably contains at least one selected from the group consisting of an aromatic polycarbonate, a polymethyl methacrylate, a styrene-acrylonitrile copolymer, polyethylene terephthalate, polybutylene terephthalate, polyvinyl chloride, polyphenylene sulfide, and polyacetal, and more preferably contains at least one selected from the group consisting of a polymethyl methacrylate and a styrene-acrylonitrile copolymer.

In addition to the above, the present resin composition can contain various well-known additives as long as the object of the present invention is not impaired.

Examples of the additive include a flame retardant (for example, phosphorus-based, bromine-based, silicone-based, or organic metal salt-based), a drip preventing agent (for example, fluorinated polyolefin, silicone, or an aramid fiber), a lubricant (for example, a long-chain fatty acid metal salt such as magnesium stearate), a mold release agent (for example, pentaerythritol tetrastearate), a nucleating agent, an antistatic agent, a stabilizer (for example, a phenol-based stabilizer, a phosphorus-based stabilizer, an ultraviolet absorbing agent, or an amine-based photostabilizer), a filler (for example, titanium oxide, talc, mica, kaolin, calcium carbonate, or glass flake), a plasticizer, a reinforcing agent (for example, a glass fiber, or a carbon fiber), a coloring agent, and a pigment. In the present invention, the flame retardance of the resin composition tends to be improved due to the presence of the polymer (C), and thus high flame retardance can be obtained even with no addition of a flame retardant or with an addition of a small amount thereof.

In a case where the coloring agent or the pigment is an inorganic pigment, examples thereof include iron oxide, ultramarine blue, titanium oxide, and carbon black. In a case of being an organic pigment, examples thereof include a phthalocyanine-based or anthraquinone-based blue pigment, a perylene-based or quinacridone-based red pigment, and an isoindolinone-based yellow pigment. Examples of the special pigment include a fluorescent pigment, a metal powder pigment, and a pearl pigment. In a case of being a dye, examples thereof include a nigrosine-based dye, a perinone-based dye, and an anthraquinone-based dye. Various grades of the coloring agent and the pigment, which are in response to required colors, are commercially available, and they can be used. One kind thereof can be used alone or in a combination of two or more kinds thereof.

The proportion of the polymer (C) in 100% by mass of the present resin composition is not particularly limited and is preferably 0.5% by mass or more, more preferably 1% by mass or more, and still more preferably 2% by mass or more. The proportion of the polymer (C) in 100% by mass of the present resin composition is preferably 30% by mass or less and more preferably 20% by mass or less. The upper and lower limits thereof may be combined in any combination.

For example, 0.5% to 30% by mass is preferable, 1% to 30% by mass is more preferable, and 2% to 20% by mass is still more preferable. In a case where the proportion of the polymer (C) is equal to or larger than the above-described lower limit value, the impact strength of the molded product to be obtained is excellent. In a case where it is equal to or smaller than the above-described upper limit value, it is possible to suppress the decreases in the fluidity of the resin composition or the heat-resistant deformation temperature.

The proportion of the thermoplastic resin (D) in 100% by mass of the present resin composition is not particularly limited and is preferably 40% by mass or more and more preferably 50% by mass or more. The proportion of the thermoplastic resin (D) in 100% by mass of the present resin composition is preferably 99.5% by mass or less, more preferably 99% by mass or less, and still more preferably 98% by mass or less. The upper and lower limits thereof may be combined in any combination. For example, 40% to 99.5% by mass is preferable, 40% to 99% by mass is more preferable, and 50% to 98% by mass is still more preferable. In a case where the proportion of the thermoplastic resin (D) is equal to or larger than the above-described lower limit value, it is possible to suppress changes in the fluidity of the resin composition or the heat-resistant deformation temperature. In a case where it is equal to or smaller than the above-described upper limit value, the impact strength of the molded product to be obtained is excellent.

[Production method for resin composition]

The resin composition can be produced by mixing the polymer (C), the thermoplastic resin (D), and an additive as necessary.

Examples of the mixing method for each material include known blending methods, which are not particularly limited. Examples thereof include a method of mixing and kneading with a tumbler, a V-type blender, a super mixer, a Nauta mixer, a Banbury mixer, a kneading roll, an extruder, or the like.

An example of the production method for the resin composition according to the present invention includes a method in which the polymer (C), the pellet-shaped thermoplastic resin (D), and an additive as necessary are mixed using an extruder, and the resultant mixture is extruded into a strand shape, which is subsequently cut into a pellet with a rotary cutter or the like. This method makes it possible to obtain a pellet-shaped resin composition.

<Molded product>

A molded product according to one aspect of the present invention (hereinafter, also denoted as "the present molded product") contains the polymer (C) and the thermoplastic resin (D).

The present molded product may further contain another component. Examples of the other component include known components.

The present molded product preferably consists of the present resin composition.

The present molded product can be produced, for example, by molding the present resin composition.

Examples of the molding method include molding methods that are used for molding a thermoplastic resin composition, for example, an injection molding method, an extrusion molding method, a blow molding method, and a calendar molding method.

The present molded product can be widely industrially used, for example, as various materials in the automobile field, the OA equipment field, the home appliance field, the electrical and electronic field, the construction field, the household and cosmetics field, and the medical product field. More specifically, it can be used as, for example, a housing for an electronic device or the like, various parts, a coating material, an automobile structural member, an automobile interior part, a light reflection plate, a building structural member, and a fixture. Still more specifically, it can be used as, for example, a housing of a personal computer, a housing of a mobile phone, a housing of a mobile information terminal, a housing of a mobile game machine, an interior/exterior member of a printer, a copying machine, or the like, a coating material of an electric conductor, an interior/exterior member of an automobile, a building exterior material, a resin window frame member, a flooring material, and a pipe member.

[Examples]

The present invention will be specifically described below with reference to Examples and Comparative Examples. Prior to Examples, various evaluation methods and Production Examples 1-1 to 1-6 of latexes of polyorganosiloxanes will be described. Examples 1-1 to 1-6 and Comparative Examples 1-1 to 1-7 are examples relating to the production and evaluation of graft copolymers, and Examples 2-1 to 2-9 and Comparative Examples 2-1 to 2-8 are examples relating to the production and evaluation of thermoplastic resin compositions. In Production Examples and Examples, "part", "%", and "ppm" mean "part by mass", "% by mass", and "ppm by mass" unless otherwise specified.

<Solid content>

A latex of a polyorganosiloxane having a mass w1 is dried with a hot air dryer at 180°C for 30 minutes, a mass w2 of a residue after the drying is measured, and the solid content [%] is calculated according to the following expression.

$$\text{Solid content [\%]} = \text{w2/w1} \times 100$$

<Particle diameter>

The "polyorganosiloxane (A1) latex" or the "polymer (C) latex)" was diluted with deionized water to a concentration of solid contents of about 3% and used as a specimen, and using a CHDF 2000 type particle size distribution meter manufactured by MATEC Applied Sciences in the United States, the number average particle diameter Dn and the mass average particle diameter Dw were measured using the following conditions.

Cartridge: A dedicated particle separation capillary type cartridge (product name; C-202),
Carrier liquid: A dedicated carrier liquid (product name; 2XGR500),
Liquidity of carrier liquid: neutral,
Flow rate of carrier liquid: 1.4 mL/min,
Pressure of carrier liquid: 4,000 psi (2,600 kPa),
Measurement temperature: 35°C,
Using amount of specimen: 0.1 mL.

<Amount of residual metal>

The amount of the residual metal was quantified with an ICP luminescence analyzer (iCAP7400 Duo, manufactured by Thermo Fisher Scientific, Inc.) by using, as a test solution, a solution obtained by weighing approximately 0.25 g of a specimen, adding 8 mL of nitric acid and 2 mL of hydrogen fluoride water thereto, carrying out a decomposition treatment with a microwave (wet-type decomposition), and the volume was adjusted to 50 mL with distilled water.

<Thermal decomposability>

The graft copolymer was subjected to thermal gravimetric analysis using TG/DTA6200 (manufactured by Seiko Instruments, Inc.), and the thermal decomposability was evaluated by the following method.

Under the condition of a nitrogen flow rate of 200 mL/min, the residual amount at each temperature in a case where the specimen temperature was raised to 550°C at 10 °C/min was calculated by Expression (1). The one in which the residual amount reached 1 % or less at the end of the test was evaluated as A, and the one in which the residual amount did not reach 1% or less was evaluated as B. For a sample having the thermal decomposability A, the thermal decomposability was calculated by Expression (2). The smaller the value calculated by (2), the shorter the time required from the start to the end of thermal decomposition, and the more excellent the thermal decomposability.

$$\text{Residual amount (\%)} = \text{mass (g) after holding /mass (g) of charging} \cdots \text{Expression (1)}$$

$$\text{Thermal decomposability (°C)} = \text{((temperature at moment when residual amount is 70\%) - (temperature at moment when the residual amount is 1\%)} \cdots \text{Expression (2)}$$

(Production method for polymer)

[Production Example 1-1: Production of polyorganosiloxane latex (S-1)]

2 parts of γ-methacryloyloxypropyldimethoxymethylsilane (DSMA) and 98 parts of octamethylcyclotetrasiloxane (manufactured by Momentive Performance Materials Japan LLC, product name: TSF404) were mixed to obtain 100 parts of an organosiloxane mixture. An aqueous solution obtained by dissolving 1 part of sodium dodecylbenzenesulfonate (DBSNa) in 150 parts of deionized water was added to the organosiloxane mixture, and the resultant mixture was stirred at 10,000 rpm for 5 minutes with a homogenization mixer and then allowed to pass through a homogenizer two times at a pressure of 20 MPa to obtain a stable premixed emulsion.

After placing the obtained emulsion in a separable flask having a capacity of 5 liters, equipped with a cooling condenser, the emulsion was heated to 80°C, and a mixture of 0.20 parts of sulfuric acid and 49.8 parts of distilled water was continuously added over 3 minutes. After the polymerization reaction was carried out by maintaining for 7 hours a state of being heated to 80°C, cooling was carried out to room temperature (25°C), and the obtained reactant was held at room temperature for 6 hours. A 5% aqueous sodium hydroxide solution was added to the obtained reactant, and the reaction solution was neutralized to a pH of 7.0 to obtain a polyorganosiloxane latex (S-1).

The solid content of the polyorganosiloxane latex (S-1) was 30.2% by mass. The number average particle diameter (Dn) was 384 nm, the mass average particle diameter (Dw) was 403 nm, and Dw/Dn was 1.05.

[Production Example 1-2: Production of polyorganosiloxane latex (S-2)]

The same operation as in Production Example 1-1 was carried out to obtain a polyorganosiloxane latex (S-2), except that the formulation of the organosiloxane mixture was changed to the formulation shown in Table 1.

The solid content of the polyorganosiloxane latex (S-2) was 30.4% by mass. The number average particle diameter (Dn) was 384 nm, the mass average particle diameter (Dw) was 403 nm, and Dw/Dn was 1.05.

[Production Example 1-3: Production of polyorganosiloxane latex (S-3)]

The same operation as in Production Example 1-1 was carried out to obtain a polyorganosiloxane latex (S-3), except that the formulation of the organosiloxane mixture was changed to the formulation shown in Table 1.

The solid content of the polyorganosiloxane latex (S-3) was 30.6% by mass. The number average particle diameter (Dn) was 384 nm, the mass average particle diameter (Dw) was 403 nm, and Dw/Dn was 1.05.

[Production Example 1-4: Production of polyorganosiloxane latex (S-4)]

The same operation as in Production Example 1-1 was carried out to obtain a polyorganosiloxane latex (S-4), except that the formulation of the organosiloxane mixture was changed to the formulation shown in Table 1.

The solid content of the polyorganosiloxane latex (S-4) was 30.8% by mass. The number average particle diameter (Dn) was 384 nm, the mass average particle diameter (Dw) was 403 nm, and Dw/Dn was 1.05.

[Production Example 1-5: Production of polyorganosiloxane latex (S-5)]

0.5 parts of γ-methacryloyloxypropyldimethoxymethylsilane (DSMA), 2 parts of tetraethoxysilane (TEOS), and 97.5 parts of octamethylcyclotetrasiloxane (manufactured by Shin-Etsu Silicone Co. Ltd., product name: DMC, a mixture of a 3- to 6-membered cyclic organosiloxanes) were mixed to obtain 100 parts of an organosiloxane mixture. An aqueous solution obtained by dissolving 0.68 parts of sodium dodecylbenzenesulfonate (DBSNa) and 0.68 parts of dodecylbenzenesulfonic acid (DBSH) in 150 parts of deionized water was added to the organosiloxane mixture, and the resultant mixture was stirred at 10,000 rpm for 5 minutes with a homogenization mixer and then allowed to pass through a homogenizer two times at a pressure of 20 MPa to obtain a stable premixed emulsion.

After placing the obtained emulsion in a separable flask having a capacity of 5 liters, equipped with a cooling condenser, the emulsion was heated to 80°C, maintained for 5 hours to carry out a polymerization reaction, and then cooled to room temperature (25°C), and the obtained reactant was held at room temperature for 6 hours A 5% aqueous sodium hydroxide solution was added to the obtained reactant, and the reaction solution was neutralized to a pH of 7.0 to obtain a polyorganosiloxane latex (S-5).

The solid content of the polyorganosiloxane latex (S-5) was 33.0% by mass. The number average particle diameter (Dn) was 64 nm, the mass average particle diameter (Dw) was 248 nm, and Dw/Dn was 3.88.

[Production Example 1-6: Production of polyorganosiloxane latex (S-6)]

The same operation as in Production Example 1-1 was carried out to obtain a polyorganosiloxane latex (S-6), except that the formulation of the organosiloxane mixture was changed to the formulation shown in Table 1 and the amount of sodium dodecylbenzenesulfonate (DBSNa) was increased to 1.5 parts.

The solid content of the polyorganosiloxane latex (S-6) was 30.8% by mass. The number average particle diameter (Dn) was 38 nm, the mass average particle diameter (Dw) was 276 nm, and Dw/Dn was 7.26.

The components of Production Examples 1-1 to 1-6 are shown in Table 1.

The abbreviations in Table 1 are as follows.

TSF404: Octamethylcyclotetrasiloxane
DMC: A mixture of 3- to 6-membered cyclic organosiloxanes
DSMA: γ-methacryloyloxypropyldimethoxymethylsilane
TEOS: Tetraethoxysilane

[Table 1]

| | | Production Example | | | | | |
|---|---|---|---|---|---|---|---|
| | | 1-1 | 1-2 | 1-3 | 1-4 | 1-5 | 1-6 |
| Polyorganosiloxane | | S-1 | S-2 | S-3 | S-4 | S-5 | S-6 |
| TSF404 | [Part] | 98 | 97 | 96 | 95 | | 96 |
| DMC | [Part] | | | | | 97.5 | |
| DSMA | [Part] | 2 | 2 | 2 | 2 | 0.5 | 2 |
| TEOS | [Part] | | 1 | 2 | 3 | 2 | 2 |
| Proportion of constitutional unit derived from siloxane-based crosslinking agent in 100% by mass of polyorganosiloxane | [% by mass] | 0 | 1 | 2 | 3 | 2 | 2 |

[Example 1-1]

80 parts (10.0 parts in terms of polymer) of the polyorganosiloxane latex (S-1) obtained in Production Example 1-1 was collected in a separable flask having a capacity of 5 liters, and 8.82 parts of butyl acrylate (BA), 0.18 parts of allyl methacrylate (AMA), and 0.16 parts of cumene hydroperoxide (CB) were added thereto, and stirring was continued at room temperature for 1 hour to impregnate the polyorganosiloxane.

The atmosphere in the flask was substituted with nitrogen by allowing a nitrogen stream to pass through, and the liquid temperature was raised to 50°C. At a moment when the liquid temperature reached 50°C, an aqueous solution obtained by dissolving 0.001 parts of ferrous sulfate (Fe), 0.003 parts of disodium ethylenediaminetetraacetic acid (EDTA), and 0.24 parts of sodium formaldehyde sulfoxylate (SFS) in 10 parts by mass of deionized water was added thereto start a radical polymerization. After the completion of the dropwise addition, a state of a liquid temperature of 65°C was maintained for 1 hour in order to complete the polymerization of the acrylate component, whereby a latex of a composite rubber of the polyorganosiloxane and the poly-n-butyl acrylate.

The liquid temperature of the obtained latex of the composite rubber was set to 65°C, a mixed liquid of 11.0 parts of methyl methacrylate (MMA) and 0.24 parts of cumene hydroperoxide (CB) was added dropwise to the latex over 1 hour, and then the graft polymerization reaction was started. After the completion of the dropwise addition, the temperature was maintained at a temperature of 65°C for 1 hour and then cooled to room temperature to obtain a latex of a polyorganosiloxane-containing graft copolymer (G-1).

500 parts of an aqueous solution having a calcium acetate concentration of 1% by mass was heated to 85°C, and 340 parts of the latex of the graft copolymer (G-1) was gradually added dropwise thereto and solidified while stirring. The obtained graft copolymer (G-1) was filtered, washed, dehydrated, and then dried to obtain a graft copolymer (G-1).

10 parts of the obtained graft copolymer (G-1) was added to 141 parts of deionized water, stirring was carried out for 3 minutes, and then 10 parts of a 10% by mass aqueous sodium chloride solution was added thereto, followed by stirring for 3 minutes. A graft copolymer (A-1) was filtered, washed, dehydrated, and then dried to obtain a sodium-containing powder (A-1) of the graft copolymer.

The mass average particle diameter, amount of alkali metal, and thermal decomposability of the obtained powder (A-1) of the graft copolymer were measured according to the above-described method. The obtained results are shown in Table 2.

[Examples 1-2 to 1-4]

Polyorganosiloxane-containing graft copolymers (G-2 to G-4) were produced in the same manner as in Example 1-1 except that the formulation of each raw material used in Example 1-1 was changed under the conditions shown in Table 2, and further, powders (A-2 to A-4) of the graft copolymers were obtained, and the same measurement was

carried out. The obtained results are shown in Table 2.

[Example 1-5]

A polyorganosiloxane-containing graft copolymer (G-1) was produced in the same manner as in Example 1-1, and then a powder (A-5) of a graft copolymers were obtained in the same manner as in Example 1-1, and the same measurement was carried out, except that the amount of the aqueous solution having a sodium chloride concentration of 10% by mass was changed to 20 parts. The obtained results are shown in Table 2.

[Example 1-6]

A polyorganosiloxane-containing graft copolymer (G-1) was produced in the same manner as in Example 1-1, and then a powder (A-6) of a graft copolymers were obtained in the same manner as in Example 1-1, and the same measurement was carried out, except that the amount of the aqueous solution having a sodium chloride concentration of 10% by mass was changed to 50 parts. The obtained results are shown in Table 2.

[Comparative Example 1-1]

A polyorganosiloxane-containing graft copolymer powder (A-7) was obtained in the same manner as in Example 1-1, and the same measurement was carried out, except that the polyorganosiloxane-containing graft copolymer (G-1) after being obtained was not treated with the sodium chloride solution. The obtained results are shown in Table 2.

[Comparative Example 1-2]

A polyorganosiloxane-containing graft copolymer powder (A-8) was obtained in the same manner as in Example 1-2, and the same measurement was carried out, except that the polyorganosiloxane-containing graft copolymer (G-2) after being obtained was not treated with the sodium chloride solution. The obtained results are shown in Table 2.

[Comparative Example 1-3]

A polyorganosiloxane-containing graft copolymer powder (A-9) was obtained in the same manner as in Example 1-3, and the same measurement was carried out, except that the polyorganosiloxane-containing graft copolymer (G-3) after being obtained was not treated with the sodium chloride solution. The obtained results are shown in Table 2.

[Comparative Examples 1-4]

A polyorganosiloxane-containing graft copolymer powder (A-10) was obtained in the same manner as in Example 1-4, and the same measurement was carried out, except that the polyorganosiloxane-containing graft copolymer (G-4) after being obtained was not treated with the sodium chloride solution. The obtained results are shown in Table 2.

[Comparative Example 1-5]

A polyorganosiloxane-containing graft copolymer (G-5) was produced in the same manner as in Example 1-1 except that the formulation of each raw material used in Example 1-1 was changed under the conditions shown in Table 2, and then further, a powder (A-11) of the graft copolymer was obtained, and the same measurement was carried out. The obtained results are shown in Table 2.

[Comparative Example 1-6]

After obtaining the polyorganosiloxane-containing graft copolymer (G-5) according to the method described in Comparative Example 1-5, 10 parts of the obtained graft copolymer (G-5) was added to 141 parts of deionized water, stirring was carried out for 3 minutes, and then 10 parts of an aqueous solution containing sodium chloride of a concentration of 10% by mass was added thereto, the resultant mixture was stirred for 3 minutes, filtered, washed, dehydrated, and then dried to obtain a powder (A-12) of the graft copolymer, containing sodium, and the same measurement was carried out. The obtained results are shown in Table 2.

[Comparative Example 1-7]

After obtaining the polyorganosiloxane-containing graft copolymer (G-6) in the same manner as in Example 1-1 except that the formulation of each raw material used in Example 1-1 was changed under the conditions shown in Table 2, 10 parts of the obtained graft copolymer (G-6) was added to 141 parts of deionized water, stirring was carried out for 3 minutes, and then 10 parts of an aqueous solution containing sodium chloride of a concentration of 10% by mass was added thereto, the resultant mixture was stirred for 3 minutes, filtered, washed, dehydrated, and then dried to obtain a powder (A-13) of the graft copolymer, containing sodium, and the same measurement was carried out. The obtained results are shown in Table 2.

[Table 2]

| | | | Example | | | | | | Comparative Example | | | | | | |
|---|---|---|---|---|---|---|---|---|---|---|---|---|---|---|---|
| | | | 1-1 | 1-2 | 1-3 | 1-4 | 1-5 | 1-6 | 1-1 | 1-2 | 1-3 | 1-4 | 1-5 | 1-6 | 1-7 |
| Graft copolymer (A) | | | A-1 | A-2 | A-3 | A-4 | A-5 | A-6 | A-7 | A-8 | A-9 | A-10 | A-11 | A-12 | A-13 |
| Graft copolymer (G) | | | G-1 | G-2 | G-3 | G-4 | G-1 | G-1 | G-1 | G-2 | G-3 | G-4 | G-5 | G-5 | G-6 |
| Rubber part | Polyorganosiloxane (S) | Kind | S-1 | S-2 | S-3 | S-4 | S-1 | S-1 | S-1 | S-2 | S-3 | S-4 | S-5 | S-5 | S-6 |
| | | Amount [part] | 80.0 | 80.0 | 80.0 | 80.0 | 80.0 | 80.0 | 80.0 | 80.0 | 80.0 | 80.0 | 80.0 | 80.0 | 80.0 |
| | Monomer for composite rubber | BA [part] | 8.82 | 8.82 | 8.82 | 8.82 | 8.82 | 8.82 | 8.82 | 8.82 | 8.82 | 8.82 | 8.82 | 8.82 | 8.82 |
| | | AMA\|part\| | 0.18 | 0.18 | 0.18 | 0.18 | 0.18 | 0.18 | 0.18 | 0.18 | 0.18 | 0.18 | 0.18 | 0.18 | 0.18 |
| Graft part | MMA [part] | | 11.0 | 11.0 | 11.0 | 11.0 | 11.0 | 11.0 | 11.0 | 11.0 | 11.0 | 11.0 | 11.0 | 11.0 | 11.0 |
| Mass average particle diameter of graft polymer | | [nm] | 422 | 409 | 406 | 404 | 422 | 422 | 422 | 409 | 406 | 404 | 217 | 217 | 298 |
| Amount of residual alkali metal | | Na [ppm] | 260 | 260 | 200 | 210 | 400 | 1200 | 2 | 2 | 2 | 2 | 3 | 220 | 1000 |
| | | K \|ppm\| | <6 | <6 | <6 | <6 | <6 | <6 | <6 | <6 | <6 | <6 | <6 | <6 | <6 |
| Thermal decomposability | | Determination | A | A | A | A | A | A | B | B | B | B | B | A | A |
| | | [°C] | 25 | 26 | 30 | 31 | 24 | 29 | | | | | | 55 | 63 |

The abbreviations in Table 2 are as follows.

nBA: n-butyl acrylate
AMA: Allyl methacrylate
MMA: Methyl methacrylate
Na: Sodium
K: Potassium

As compared with the graft polymers according to Comparative Examples 1-1 to 1-7, the graft copolymers according to Examples 1-1 to 1-6 had improved thermal decomposability.

[Examples 2-1 to 2-9 and Comparative Examples 2-1 to 2-8]

The polyorganosiloxane-containing polymer powder, the additive, and the thermoplastic resin were blended at a ratio shown in Table 3 to obtain a mixture. This mixture was supplied to a volatilization type twin-screw extruder (manufactured by Ikegai Corp., PCM-30 (product name)) and kneaded to produce a pellet of each resin composition.
The following one was used as the thermoplastic resin.
PC: A polycarbonate resin (Tupilon S-2000F, manufactured by Mitsubishi Engineering-Plastics Corporation, viscosity average molecular weight: 24,000).
The following one was used as the additive.
A-3750: Acrylic-modified PTFE (METABLEN A-3750, manufactured by Mitsubishi Chemical Corporation).
The pellet of the resin composition was subjected to injection molding using an injection molding machine (manufactured by Sumitomo Heavy Industries, Ltd., SE100DU (product name)) to produce a test piece for evaluation.
Specifications of test pieces:

Test piece A: length 80 mm × width 10 mm × thickness 4 mm
Test piece B: length 100 mm × width 50 mm × thickness 2 mm
Test piece C: length 125 mm × width 13 mm × thickness 1.6 mm

The extrusion conditions and the injection molding conditions are as follows.

Extrusion barrel temperature: 280°C,
Injection cylinder temperature: 280°C,
Metal mold temperature: 60°C.

A notch of TYPE A in accordance with ISO 179-1 was carved on the test piece A, and the Charpy impact strength was measured. The higher the numerical value of the Charpy impact strength, the higher the impact resistance. The obtained results are shown in Table 3.
With respect to the test piece B, a flow mark (a pattern seen in a striped shape in the vicinity of the gate of the molded product) appearing in the vicinity of the gate of test piece B is visually observed.
"Determination method": The external appearance of the gate part is visually determined (A: the flow mark is noticeable, B: the flow mark is not noticeable). Table 3 shows the evaluation results.
Using the test piece C, the total combustion time of the five test pieces and the presence or absence of the drip at the time of ignition were measured according to a vertical combustion test method in accordance with the UL94V test. It is preferable that the shorter the total combustion time is, the higher the flame retardance is, and there is no drip. Table 3 shows the evaluation results.

[Table 3]

| | | Example | | | | | | | | | Comparative Example | | | | | | | |
|---|---|---|---|---|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-1 | 2-2 | 2-3 | 2-4 | 2-5 | 2-6 | 2-7 | 2-8 |
| Thermoplastic resin [%] | PC | 10 | 95 | 93 | 90 | 95 | 95 | 95 | 95 | 95 | 100 | 95 | 95 | 95 | 95 | 95 | 95 | 95 |
| Graft copolymer (A) | Kind | A-1 | A-1 | A-1 | A-1 | A-2 | A-3 | A-4 | A-5 | A-6 | | A-7 | A-8 | A-9 | A-10 | A-11 | A-12 | A-13 |
| | Amount | 3 | 5 | 7 | 10 | 5 | 5 | 5 | 5 | 5 | | 5 | 5 | 5 | 5 | 5 | 5 | 5 |
| Additive [%] | A-3750 | 0.24 | 0.24 | 0.24 | 0.24 | 0.24 | 0.24 | 0.24 | 0.24 | 0.24 | 0.24 | 0.24 | 0.24 | 0.24 | 0.24 | 0.24 | 0.24 | 0.24 |
| Charpy impact strength | 23°C [KJ/m$^2$] | 63 | 64 | 53 | 47 | 61 | 64 | 64 | 64 | 55 | 78 | 66 | 71 | 70 | 69 | 68 | 62 | 60 |
| | -30°C [kJ/m$^2$] | 30 | 50 | 42 | 38 | 47 | 43 | 42 | 48 | 44 | 11 | 54 | 55 | 53 | 54 | 57 | 55 | 51 |
| Flame retardance | Combustion time [second] | 51 | 57 | 49 | 56 | 79 | 59 | 97 | 55 | 71 | 264 | 285 | 294 | 254 | 292 | 226 | 121 | 189 |
| | Presence of absence of drip | Absent | Absent | Absent | Absent | Absent | Absent | Absent | Absent | Absent | Present | Absent | Present | Absent | Absent | Absent | Absent | Absent |
| External appearance | Flow mark determination | A | A | A | A | A | A | A | A | A | A | A | A | A | A | B | B | A |

Since the resin composition according to Comparative Example 2-1 did not contain a graft copolymer, the low-temperature impact strength and the flame retardance were low.

The molded products according to Examples 2-1 to 2-9 containing a polymer containing alkali metal atoms of a specific amount and a specific particle diameter had more favorable flame retardance as compared with the molded products according to Comparative Examples 2-1 to 2-8.

As compared with the graft copolymers according to Examples 2-1 to 2-9, the graft copolymers according to Comparative Examples 2-6 and 2-7 were inferior in external appearance properties due to having a small particle diameter.

## Claims

**1.** A polyorganosiloxane-containing polymer comprising:

100 ppm by mass or more of an alkali metal atom,
wherein a mass average particle diameter Dw is 350 nm or more.

**2.** The polyorganosiloxane-containing polymer according to Claim 1, wherein the mass average particle diameter Dw is 1,000 nm or less.

**3.** The polyorganosiloxane-containing polymer according to Claim 1 or 2,

wherein the polyorganosiloxane-containing polymer is a polymer having a composite body and a graft part,
the composite body comprises a polyorganosiloxane and a first vinyl polymer, and
the graft part comprises a second vinyl polymer.

**4.** The polyorganosiloxane-containing polymer according to Claim 3, wherein a proportion of the graft part in 100% by mass of the polyorganosiloxane-containing polymer is 5% by mass or more and 20% by mass or less.

**5.** The polyorganosiloxane-containing polymer according to Claim 3 or 4, wherein the first vinyl polymer comprises a constitutional unit derived from a (meth)acrylate monomer.

**6.** The polyorganosiloxane-containing polymer according to any one of Claims 3 to 5,
wherein the second vinyl polymer comprises a constitutional unit derived from a (meth)acrylate monomer.

**7.** The polyorganosiloxane-containing polymer according to any one of Claims 3 to 6,

wherein the polyorganosiloxane comprises a constitutional unit derived from a siloxane-based crosslinking agent, and
a proportion of the constitutional unit derived from the siloxane-based crosslinking agent in 100% by mass of the polyorganosiloxane is 3% by mass or less.

**8.** The polyorganosiloxane-containing polymer according to any one of Claims 1 to 7,
wherein a proportion of a polyorganosiloxane in 100% by mass of the polyorganosiloxane-containing polymer is 70% by mass or more and 98% by mass or less.

**9.** The polyorganosiloxane-containing polymer according to any one of Claims 1 to 8,
wherein the alkali metal atom is a sodium atom.

**10.** The polyorganosiloxane-containing polymer according to any one of Claims 1 to 9,
wherein the polyorganosiloxane-containing polymer is in a powder state.

**11.** A composition comprising:

the polyorganosiloxane-containing polymer according to any one of Claims 1 to 10; and
a thermoplastic resin.

**12.** A molded product comprising:

the polyorganosiloxane-containing polymer according to any one of Claims 1 to 10; and
a thermoplastic resin.

## INTERNATIONAL SEARCH REPORT

International application No.
**PCT/JP2022/014884**

### A. CLASSIFICATION OF SUBJECT MATTER

***C08F 283/12***(2006.01)i; ***C08F 290/06***(2006.01)i; ***C08G 77/442***(2006.01)i; ***C08L 33/04***(2006.01)i; ***C08L 51/08***(2006.01)i; ***C08L 83/04***(2006.01)i; ***C08L 101/00***(2006.01)i
FI: C08F283/12; C08L101/00; C08L33/04; C08F290/06; C08G77/442; C08L83/04; C08L51/08

According to International Patent Classification (IPC) or to both national classification and IPC

### B. FIELDS SEARCHED

Minimum documentation searched (classification system followed by classification symbols)

C08F283/12; C08F290/06; C08G77/442; C08L33/04; C08L51/08; C08L83/04; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY

### C. DOCUMENTS CONSIDERED TO BE RELEVANT

| Category* | Citation of document, with indication, where appropriate, of the relevant passages | Relevant to claim No. |
|---|---|---|
| X | JP 2009-127052 A (CHEIL INDUSTRIES INC.) 11 June 2009 (2009-06-11) claims 8-11, paragraphs [0018]-[0031], [0040]-[0047], [0049]-[0069] | 1, 2, 9-12 |
| A | JP 2020-41067 A (MITSUBISHI CHEM CORP) 19 March 2020 (2020-03-19) entire text | 1-12 |
| A | JP 2001-152156 A (DAINIPPON INK & CHEM INC) 05 June 2001 (2001-06-05) entire text | 1-12 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **21 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/014884**

| Patent document cited in search report | Publication date (day/month/year) | Patent family member(s) | Publication date (day/month/year) |
|---|---|---|---|
| JP 2009-127052 A | 11 June 2009 | US 2009/0137766 A1 claims 8-11, paragraphs [0017]-[0027], [0034]-[0045], [0046]-[0059] | |
| JP 2020-41067 A | 19 March 2020 | (Family: none) | |
| JP 2001-152156 A | 05 June 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021056873 A
- WO 2018225582 A
- WO 2013162080 A


### Non-patent literature cited in the description


- POLYMER HANDBOOK. Wiley, Interscience Inc, 1999